Europäisches Patentamt

(19) European Patent Office

Office européen des brevets

(11) Publication number : **0 367 420 B1**

(12) **EUROPEAN PATENT SPECIFICATION**

(45) Date of publication of patent specification :
22.01.92 Bulletin 92/04

(51) Int. Cl.⁵ : **C02F 1/42, B01J 47/02**

(21) Application number : **89310267.3**

(22) Date of filing : **06.10.89**

(54) Water purifier applicable to running water system.

(30) Priority : **06.10.88 JP 250975/88**

(43) Date of publication of application :
**09.05.90 Bulletin 90/19**

(45) Publication of the grant of the patent :
**22.01.92 Bulletin 92/04**

(84) Designated Contracting States :
**DE FR GB**

(56) References cited :
**WO-A-88/02738**
**FR-A- 1 307 688**
**GB-A- 1 467 277**
**GB-A- 2 197 307**

(73) Proprietor : **NEC CORPORATION**
**7-1, Shiba 5-chome Minato-ku**
**Tokyo 108-01 (JP)**

(72) Inventor : **Nakamoto, Shinya, c/o NEC**
**Corporation**
**33-1, Shiba 5-chome**
**Minato-ku, Tokyo (JP)**
Inventor : **Kimura, Jun, c/o NEC Corporation**
**33-1, Shiba 5-chome**
**Minato-ku, Tokyo (JP)**
Inventor : **Matsuo, Yoichi, c/o NEC Corporation**
**33-1, Shiba 5-chome**
**Minato-ku, Tokyo (JP)**
Inventor : **Tsuzaki, Masaaki, c/o NEC**
**Corporation**
**7-15, Shiba 5-chome**
**Minato-ku, Tokyo (JP)**

(74) Representative : **Abnett, Richard Charles et al**
**REDDIE & GROSE 16 Theobalds Road**
**London WC1X 8PL (GB)**

## Description

BACKGROUND OF THE INVENTION

Field of the Invention :

The present invention relates to a dip-type water purifier using ion exchange resin, adsorbents and the like, and more particularly to a simple water purifier for purifying cooling water being continuously circulated in a water-cooled system for, e.g. a large or a medium computer.

Description of the Related Art :

Cooling water to be continuously circulated is often employed in so-called water-cooled systems for large computers. Notwithstanding, attention is seldom riveted to the quality of cooling water for use in such a cooled-water system. In water-cooled systems, the cooling effect pipe corrosion, scale and the like are only put in question and consequently chemical agents such as corrosion inhibitors, scale removers, bactericides and the like have been added sometimes. However, water-cooled systems are often operated actually without using those chemical agents or observing the water quality. In this case, the cooling water is totally replaced with new cooling water frequently or otherwise part of it is continuously discharged to supplement a new one.

The method of using cooling water always in a clean state by purifying the cooling water being continuously circulated is followed in large-scale water-cooled systems or plants in which special purifiers for discharging the water or producing pure water are installed. On the other hand, cooling water is rarely purified in most of small-scale cooled-water systems.

In the case of cooling water continuously circulated for reuse in the water-cooled system, the water quality tends to gradually deteriorate because of corrosion of piping material and propagation of bacteria. Another problem is that the cooling water channel becomes narrow because of deposit of scale on the piping material.

If the same cooling water is used for a long time even in a system using corrosion-resistant material in contact with the liquid, the cooling water will become gradually filthy as metal ions liquate out from the metal portion in contact with the liquid and as organic matter, metal ions and salts liquate out from the plastic portion in contact therewith.

In an open system, moreover, contaminants in the air dissolve in cooling water from the portion where it comes into contact with the air so that the water quality also deteriorates. Carbon dioxide other than contaminants in the air, for instance, may dissolve in the cooling water and increase the hydrogen ion concentration therein, thus causing the deterioration of the water quality, which results in the corrosion of the metal portion as the piping material.

For this reason, the cooling water has to be totally replaced with new cooling water with extraordinary frequency. The operation of the water-cooled system has to be suspended then when the cooling water is thus refreshed. The loss incurred by the suspension of the operation is by no means negligible in the case of any system to be continuously operated.

With the use of chemical agents such as corrosion inhibitors, scale removers, bactericides and the like added to cooling water, it becomes necessary not only observing the water quality but also adding the chemical agents continuously or intermittently to ensure that the concentration of each chemical agent remains in an effective range of concentration. Even in this case, the cooling water has to be refreshed for the long time and this means it becomes an issue for the reasons enumerated above. Since organic matter, metal ions and inorganic salts such as phosphoric acid are contained in the cooling water to which the chemical agents have been added, the used cooling water to be replaced with a new one needs disposing in an adequate way. One of the difficulties still lies in the fact that the waste cooling water is not directly disposable when the water-cooled system is disposed in a place without draining facilities, e.g. where office work is performed.

On the other hand, a generally known practice is to use ion exchange resin and adsorbents such as active carbon to purify water containing ionic contaminants and organic matter, respectively. Although it is technically possible to purify cooling water being circulated in water-cooled systems in the manner mentioned above, pumps and cylinders filled with ion exchange resin and adsorbents necessitate a corresponding space for their installation and therefore result in making such a water-cooled system large-sized. Under the circumstances in which the tendency is for not only water-cooled systems but also any other ones to be made compact, users as well as manufacturers would not accept that water-cooled systems are redesigned to increase their size only to purify cooling water, which is expected not directly affect the whole operation for the short time.

SUMMARY OF THE INVENTION

An object of the present invention is to provide a simple water purifier free from the foregoing drawbacks and applicable to any water-cooled system being already operated. More specifically, the present invention aims at providing a water purifier simple in construction and capable of being readily applicable to an existing running water system in that it can maintain cooling water being circulated always in a clean state without adding chemical agents and replacing the cooling water with a new one.

A water purifier according to the present invention is employed to purify water while being dipped in the running water, the water purifier comprising storage containers in the form of a hollow plate having one or both sides wholly or partially formed with reticulate materials, the hollow plate being filled with ion exchange resin or an adsorbent such as active carbon. Further, the storage containers are fixed into a cubic body in the form of a hollow box having a plurality of openings in the whole surface thereof and reticulate materials bonded to the inside thereof.

The substantial adsorbent function of ion exchange resin and an adsorbent is utilized in the present invention. The use of ion exchange resin and an adsorbent is facilitated by the water purifier which is simultaneously made applicable to any existing running water system according to the present invention.

More specifically, each storage container in the form of a hollow plate having at least both surface and undersurface, excluding side faces, wholly or partially formed with reticulate materials, the hollow plate being filled with ion exchange resin or an adsorbent so that the former or latter is allowed to thoroughly come in contact with cooling water. The storage containers are completely dipped in, e.g. a cooling water tank.

Importance should be attached to an arrangement of the storage container for use in the water purifier according to the present invention in such a manner that it is in the form of a plate having a greater area in contact with liquid per volume and less complexity in construction to improve the contact between the cooling water and the filler. Both surface and undersurface, excluding side faces, of the plate structure should be formed with water permeable reticulate materials. Although the greater the area of each reticulate material, the greater the contact efficiency between the cooling water and the filler becomes, the distribution of the filler may be biased, i.e. apparent thickness of a portion may becomes greater than that of another because the reticulate material surfaces turn uneven if both surface and undersurface of the plate are totally formed with the reticulate materials. By setting part of both surface and undersurface of the plate free of the reticulate materials or using a perforated reinforcing plate or bar for supporting the exterior of each reticulate material, the unevenness of the reticulate material may be minimized. The mesh size of each reticulate material for use in the storage container should be so small as not to pass the filler but should not be too small to decrease the contact efficiency between the cooling water and the filler. The storage container should be made of selected material which is corrosion-resistant to and free from contaminating the filler and the cooling water.

A cubic body having a plurality of openings in the whole surface and the interior surface formed with a reticulate material and further capable of fitting itself with the storage containers may be provided for protecting the reticulate parts of the storage containers, preventing fine particles of ion exchange resin or an adsorbent from flowing through the cooling water and preventing the storage containers from contacting each other as the water current swings when a plurality of storage containers are used. The cooling water can be purified continuously with stability and reliability by dipping the whole cubic body in water to be purified. As means for fixing the storage containers to the cubic body, use can be made of grooves provided in the cubic body so that the storage containers are plugged in the grooves. In case the uneven surface of the reticulate material surface becomes inconvenient when the storage container is fitted into the groove of the cubic body, it is important to use the reinforcing plate or bar for supporting the exterior of the reticulate material. The cubic body should be made of selected material which is free from contaminating the filter and the cooling water as in the case of the storage container. When both the storage containers and cubic body are made of metal material, it should be selected in full consideration of galvanic corrosion.

BRIEF DESCRIPTION OF THE DRAWINGS

The above and further objects, features and advantages of the present invention will become more apparent from the following detailed description with reference to the accompanying drawings, wherein :

Figs. 1a and 1b are perspective views illustrating a configuration of a storage container embodying the present invention ;

Fig. 2a is a graph illustrating change in electric conductivity of cooling water with time when the storage container of Fig. 1a is filled with ion exchange resin according to the present invention ;

Fig. 2b is a graph illustrating change in the total organic carbon concentration of cooling water with time when the storage container of Fig. 1a is filled with active carbon ;

Fig. 3 is a perspective view of the storage containers of Fig. 1a packaged into a cubic body according to the present invention ;

Figs. 4a and 4b are plan and side views of the cubic body of Fig. 3 dipped in cooling water in a cooling water tank ;

Fig. 5a is a graph illustrating changes in electric conductivity of cooling water with time when the storage container is packaged into the cubic body of Fig. 3 and when an empty container is packaged therein according to the present invention, respectively ;

Fig. 5b is a graph illustrating changes in the total organic carbon concentration of cooling water with time when the storage container is packaged into the cubic body of Fig. 3 and when an empty container is packaged therein according to the present invention, respectively ; and

Fig. 6 is a schematic graph showing a cooling system using water purifier according to the present invention.

## DETAILED DESCRIPTION OF THE PREFERRED EMBODIMENTS

A description will subsequently be given of the basic structure necessary for implementing the present invention.

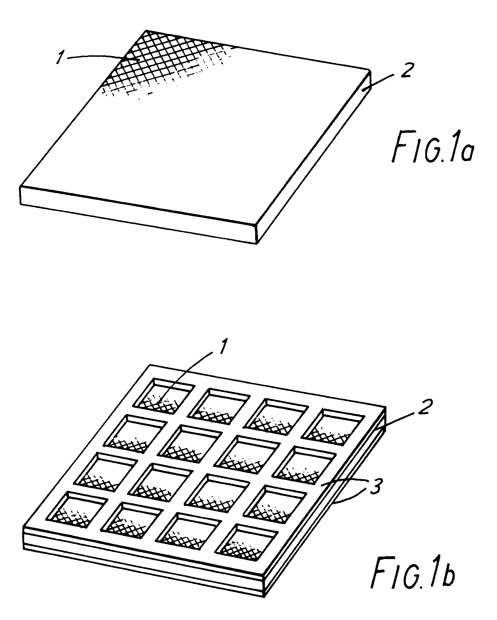

Figs. 1a and 1b are perspective views of a storage container filled with ion exchange resin. In this embodiment, reticulate materials 1, a frame 2 and reticulate material support plates 3 were formed of stainless steel (JIS, SUS 316). Only ion exchange resin was used and no adsorbent was used in this embodiment. All sides except those of the frames 2 of the storage container were formed with the reticulate materials 1 of stainless meshes (JIS, 0.25 mm in mesh size, 60 meshes) in Fig. 1a and the reticulate material support plates 3 were provided on the periphery of a group of reticulate materials 1 in Fig. 1b.

Evaluation will subsequently be made of ion exchange resin as a filler when the aforementioned basic structure of the present invention is employed.

The storage container shown in Fig. 1a was filled with 50 ml of mixed ion exchange resin (Amber Light IRN-150 of Japan Organo Co., Ltd.) and then dipped in cooling water for a water-cooled system, the cooling water being contained in a 1 L (liter) glass beaker. The cooling water in the glass beaker was stirred using a magnetic-stirrer. The cooling water has the following properties : pH = 6.7 and electric conductivity = 30.1 micro siemens per centimeter ($\mu$S/cm).

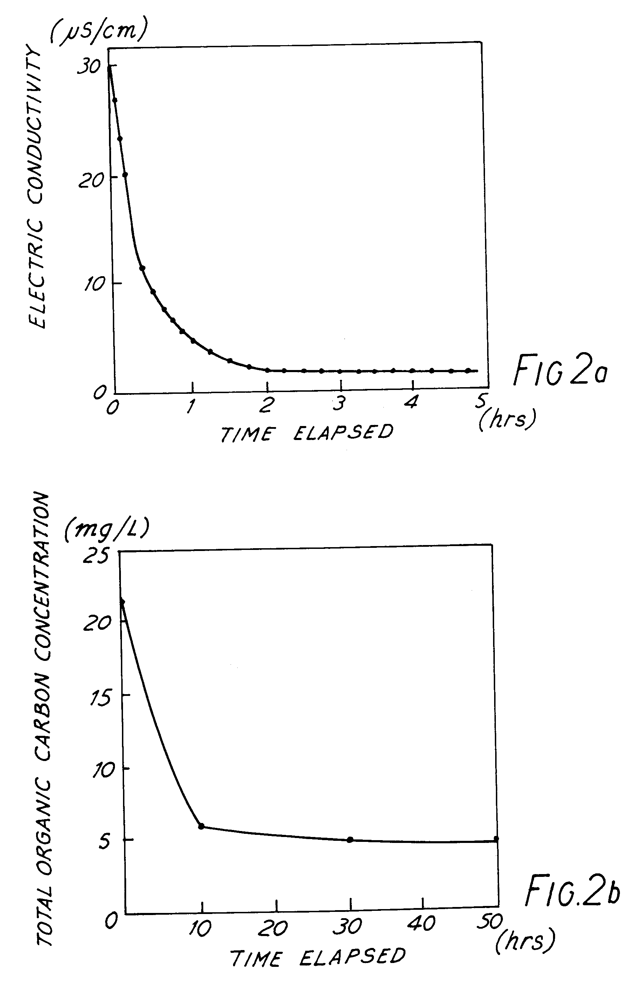

Fig. 2 shows a graph illustrating change in electric conductivity of cooling water with time after experiments were commenced. The conductivity five hours after the commencement of the experiment was 1.5 $\mu$S/cm and the cooling water used for testing was purified.

Evaluation will subsequently be made of a case where an adsorbent is used as a filler.

The storage container shown in Fig. 1a was filled with 50 ml of granular active carbon (X-7100 of Takeda Chemical Industries, Ltd.) as a filler to test cooling water under the same conditions as in the case of the preceding embodiment.

As shown in Fig. 2b, the total organic carbon concentration (TOC) of cooling water decreased from 22 mg/L to 4.3 mg/L 50 hours after the commencement of the experiment.

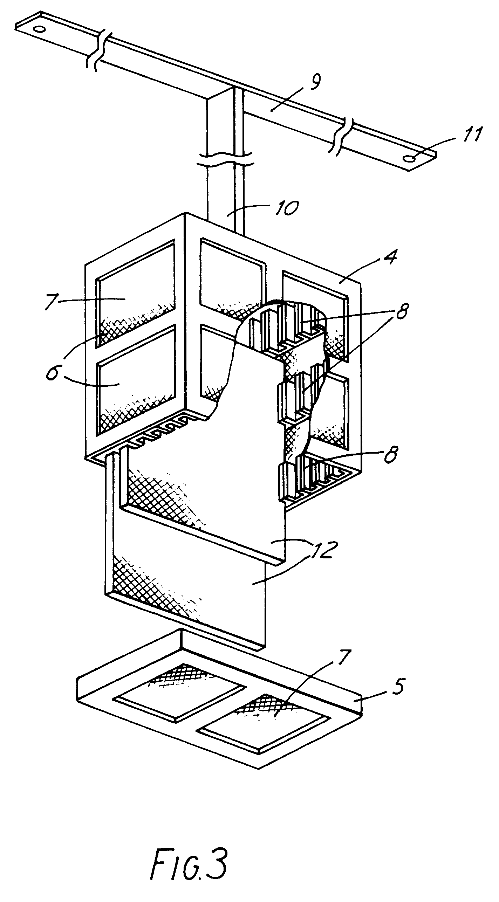

Fig. 3 is a perspective view of a cubic body having a plurality of openings made in the whole surface thereof, reticulate materials covering the interior thereof and grooves for introducing plug-in storage containers shown in Fig. 1. As shown in Fig. 3, a plurality of openings 6 for passing water are provided in the whole surface of the cubic body 4 and a lid 5 and reticulate materials 7 are fastened to the openings 6 for passing water on the interiors of the cubic body 4 and the lid 5. Moreover, guide grooves 8 are provided in the two sides of the interior of the cubic body 4. As shown in Fig. 3, further, the cubic body is so arranged as to receive six sheets of plug-in storage containers shown in Fig. 1. Although a fixing plate 9 and a suspension plate 10 have been incorporated with the cubic body for the sake of convenience as shown in Fig. 3, the present invention is not limited in configuration to the arrangement shown therein because they are designed for use in completely dipping the whole cubic body in the cooling water. After the storage containers are plugged in the cubic body 4, the lid 5 is fitted in position in such a manner as to cover the cubic body 4 and fixed with screws (not shown) so as to incorporate the cubic body 4 and the lid 5. There are provided three guide grooves 8 per side of each storage container within the cubic body, whereby the storage containers 12 are prevented from swinging as well as contacting each other. In this embodiment, the cubic body 4, the lid 5, the reticulate materials 7, the guide grooves 8, the fixing plate 9 and the suspension plate 10 were made of stainless steel (JIS, SUS 316). As for the reticulate materials 7, stainless meshes (JIS, 0.15 mm in mesh size, 100 meshes) were used.

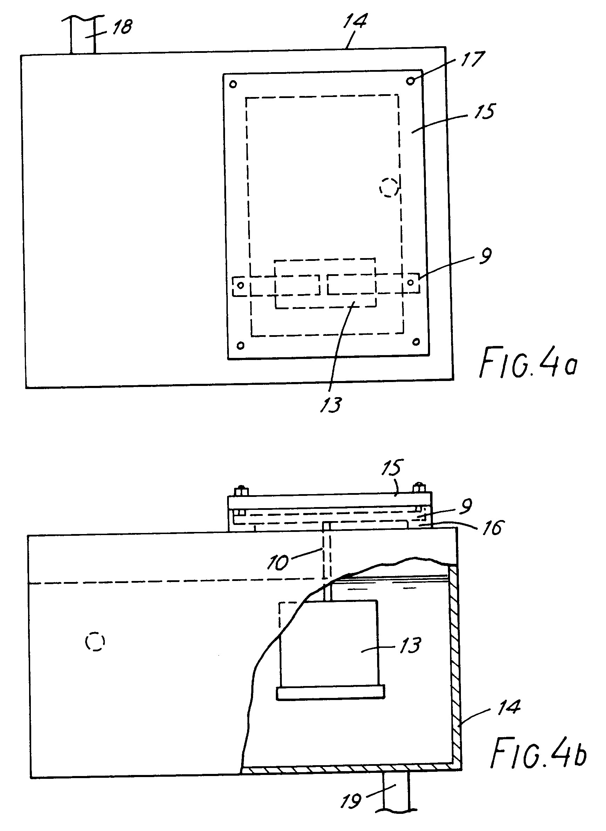

Figs. 4a and 4b are plan and partially exploded side views of the cubic body of Fig. 3 fixed in a cooling water tank of a water-cooled system. In Figs. 4a, 4b, a cubic body 13 remains completely dipped in cooling water and fixed to a cooling water tank 14 by means of the fixing plate 9 and the suspension plate 10. In this embodiment, the method of fixing the cubic body 13 comprises the steps of cutting part of the seat 16 of a cooling water tank lid 15, boring holes corresponding in position to fixing holes 11 of the suspension plate 10 and fixing the screw holes and the fixing holes 11 by means of screws. This example is intended to provide one of the embodiments and not to limit the present invention in terms of the fitting method. With reference to Fig. 4a, the portion where the fixing plate 9 and the corresponding seat 16 are shown to superpose each other is such that the seat 16 has been cut as shown in Fig. 4b. In other words, the cubic body is fixed to the seat and then a lid member of the cooling water tank is installed before the lid member of the cooling water tank is fitted thereto to make the tank airtight. The cooling water in this embodiment is introduced from a cooling water inlet 18 to the cooling water tank 14 and discharged from a cooling water outlet 19.

Evaluation will subsequently be made of a case where ion exchange resin and an adsorbent both are simultaneously used as fillters. Three sheets of storage containers having the structure shown in Fig. 1a were prepared, each being filled with 50 ml of mixed ion exchange resin or 50 ml of granular active carbon. The storage containers were fitted into the cubic body as shown in Fig. 3 in such a manner that the different kinds of storage containers are adjacent to each other. The cubic body was fixed in the cooling water tank as shown in Fig. 4.

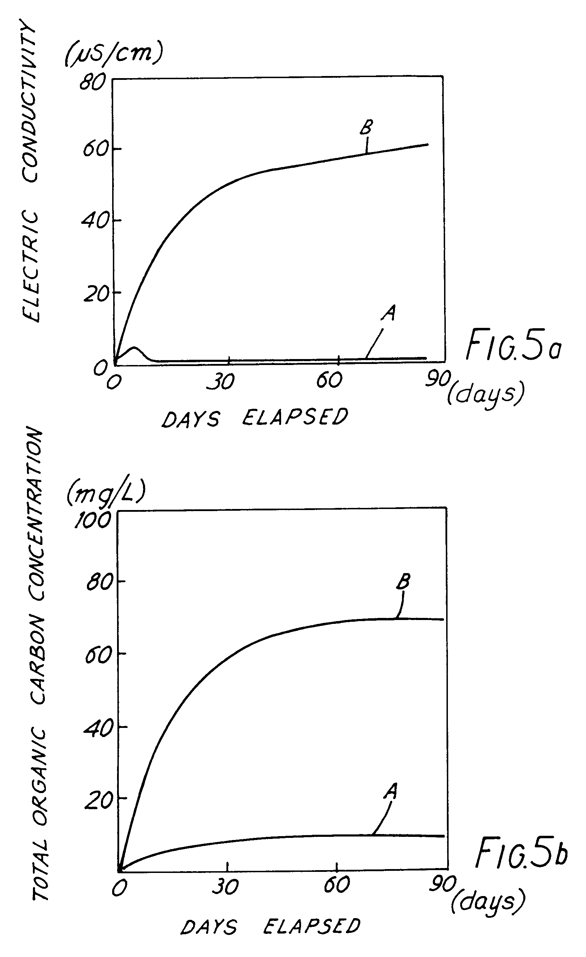

Fig. 5a shows a graph illustrating change in electric conductivity of cooling water by means of a line A in the water-cooled system replaced with new ion exchange resin upon commencement of the experiments in this embodiment. Fig. 5b shows a graph illustrating change in TOC of cooling water in the system likewise. Six sheets of storage containers of Fig. 1a filled with no ion exchange resin nor adsorbent (empty containers) were prepared and fitted into the cubic body as shown in Fig. 3. Figs. 5a and 5b show graphs illustrating changes in electric conductivity and TOC of the cooling water in the water-cooled system by means of a line B. The conductivity of the cooling water in this embodiment 90 days after the commencement of the experiment was 3.5 μS/cm, whereas TOC was 12 mg/L, the conductivity was 62 μS/cm, whereas TOC was 72 mg/L in case of the empty storage container.

As is obvious from the results shown in Fig. 2a and 2b, the storage container in the form of a hollow plate having at least both surface and undersurface, excluding side faces, wholly or partially formed with reticulate materials, the hollow plate being filled with ion exchange resin or an adsorbent, is completely dipped in the cooling water intended for purification so that the intended cooling water can be purified. As shown in Figs. 5a, 5a, moreover, the simultaneous use of storage containers respectively filled with ion exchange resin and adsorbents apparently causes not only the electric conductivity but also TOC of the water intended for purification to be decreased at the same time. Although a reference has been made of a case where the individual storage containers were filled with ion exchange resin or an adsorbent, they may be filled with a mixture of both.

As set forth above, the pollution of the water intended for purification was seen to be preventable by dipping into the water the whole cubic body having the plurality of openings and the reticulate materials fastened to the interior thereof and further the storage containers fitted into the plug-in guide grooves provided therein. Moreover, part of the seat of the lid of the water purifier according to the present invention is cut, so that the water circulated in any one of the conventional water-cooled systems that have been unconnected with water purification is purified.

The cubic body is removable by opening the lid of the water tank even when the ion exchange resin and adsorbents are saturated. By this is meant that the storage containers filled with ion exchange resin and adsorbents are replaceable without stopping the operation of the water-cooled system. As the cooling water is being purified at all times, the cooling water needs no refreshing.

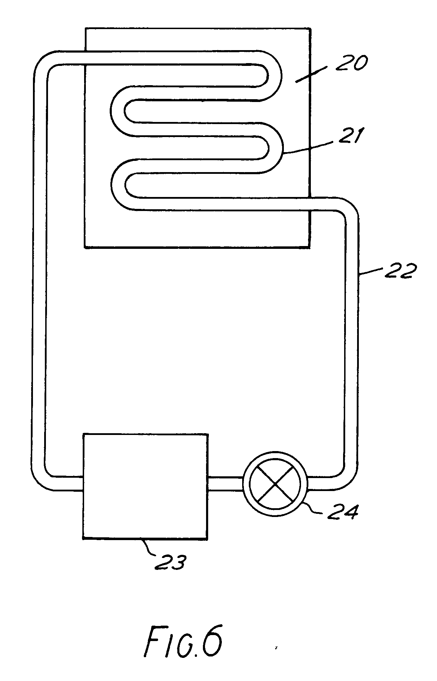

Fig. 6 shows a case in which the cooling water tank according to the present invention as shown in Figs. 4a and 4b is applied to the cooling system of a heat source 20 such as semiconductor devices in a computer. This system performs cooling with cooling water being circulated, and more particularly forms an air-tight closed system in which the cooling water is circulated. A heat absorption part 21 of a circulating pipe 22 is arranged in contact with the heat source 20. A metal or resinous pipe is used as the circulating pipe 22 in accordance with requirements such as arranged place or amount of the heat source 20. Cooling water in the pipe 22 is circulated at some liters per minute by a circulating pump 24. Heat received from the heat source 20 at the heat absorption part 21 is absorbed in the cooling water tank 23. The cubic body shown in Fig. 3 in accordance with the present invention is assembled in the cooling water tank 23 in such a manner that the cubic body is dipped in the cooling water as shown in Figs. 4a and 4b. The graphs of electric conductivity and TOC shown in Figs. 5a and 5b show experiment data of the cooling water in this cooling system.

The provision of the aforementioned water purifier makes ion components and organic matter which form a source for pollution of cooling water removable by means of ion exchange resin and adsorbents such as active carbon. As a result, the cooling water is always kept clean, whereby generation of scale and propagation of bacteria on the interior of piping material can be prevented. Contaminants derived from the material and the air in contact with the cooling water can also be removed. No chemical agents such as corrosion inhibitors, scale removers, bactericides and the like thus become necessary to use. In addition, water quality needs not monitoring.

As set forth above, there can be provided, according to the present invention, a water purifier simple in construction and capable of being readily applicable to an existing running water system in that it is able to maintain cooling water being circulated always in a clean state without adding chemical agents and replacing the cooling water with a new one.

## Claims

1. A water purifier comprising a plurality of plate-like containers filled with ion exchange resin or an adsorbent as a filter, at least part of first and second major surfaces of said plate-like container being formed with respective reticulate materials ; a frame wherein said plurality of plate-like containers are fixed a predetermined space apart from each other ; a tank having said frame being fixed and totally dipped into a liquid being purified ; and a pipe circulating said liquid through a heat source.

2. A water purifier as claimed in claim 1, wherein said first and second major surfaces and undersurface of said plate-like container are formed with respective reticulate materials and wherein said surface and undersurface both are held with respective punched plates.

3. A water purifier as claimed in claim 1, wherein each of said plate-like containers is filled with ion exchange resin or an adsorbent prescribed and wherein two kinds of plate-like containers are alternately disposed in said frame.

4. A water purifier as claimed in claim 1, wherein each of said plate-like containers is filled with a mixture of ion exchange resin and an adsorbent.

5. A water purifier as claimed in claim 1, wherein said plurality of plate-like containers are filled with ion exchange resin.

6. A water purifier as claimed in claim 1, wherein said plurality of plate-like containers are filled with as adsorbent.

7. A water purifier as claimed in claim 1, wherein said frame is formed with reticulate materials provided over the whole surface thereof.

8. A water purifier as claimed in claim 1, wherein a liquid intended for purification is cooling water to be circulated in a water-cooled system of an air-tight closed system.

## Patentansprüche

1. Wasserreinigungsvorrichtung mit mehreren plattenförmigen Behältern, die mit Ionenaustauscherharz oder einem Adsorbens als Filter gefüllt sind, wobei wenigstens ein Teil der ersten und zweiten Hauptflächen des plattenförmigen Behälters aus entsprechenden netzförmigen Materialien ausgebildet ist ; einem Rahmen, in dem die mehreren plattenförmigen Behälter in einem vorbestimmten Abstand voneinander befestigt sind ; einem Tank mit dem daran befestigten Rahmen, der völlig in eine zu reinigende Flüssigkeit eingetaucht ist ; und mit einem Rohr, das die Flüssigkeit durch eine Wärmequelle zirkuliert.

2. Wasserreinigungsvorrichtung nach Anspruch 1, wobei die ersten und zweiten Hauptflächen und die Unterseiten des plattenförmigen Behälters aus entsprechenden netzförmigen Materialien ausgebildet sind und sowohl die Oberfläche als auch die Unterseite mit entsprechenden gelochten Platten gehalten werden.

3. Wasserreinigungsvorrichtung nach Anspruch 1, wobei jeder plattenförmige Behälter mit Ionenaustauscherharz oder einem vorgegebenen Adsorbens gefüllt ist und zwei Arten von plattenförmigen Behältern abwechselnd in dem Rahmen angeordnet sind.

4. Wasserreinigungsvorrichtung nach Anspruch 1, wobei jeder plattenförmige Behälter mit einer Mischung aus Ionenaustauscherharz und einem Absorbens gefüllt ist.

5. Wasserreinigungsvorrichtung nach Anspruch 1, wobei die mehreren plattenförmigen Behälter mit Ionenaustauscherharz gefüllt sind.

6. Wasserreinigungsvorrichtung nach Anspruch 1, wobei die mehreren plattenförmigen Behälter mit einem Adsorbens gefüllt sind.

7. Wasserreinigungsvorrichtung nach Anspruch 1, wobei der Rahmen über seine gesamte Oberfläche aus netzförmigen Materialien ausgebildet ist.

8. Wasserreinigungsvorrichtung nach Anspruch 1, wobei eine zu reinigende Flüssigkeit Kühlwasser ist, das in einem wassergekühlten System eines luftdicht verschlossenen Systems zirkuliert.

## Revendications

1. Purificateur d'eau comprenant une multitude de conteneurs en forme de plaque remplis d'une résine échangeuse d'ions, ou d'un adsorbant comme filtre, au moins une partie des première et seconde surfaces principales dudit conteneur en forme de plaque étant constituée de matériaux respectifs réticules ; un châssis dans lequel ladite multitude de conteneurs en forme de plaque sont fixés en étant espacés d'une distance prédéterminée les uns des autres ; un réservoir ayant ledit châssis fixé et totalement immergé dans un liquide qu'on purifie ; et une conduite faisant circuler ledit liquide dans une source de chaleur.

2. Purificateur d'eau selon la revendication 1, dans lequel lesdites première et seconde surfaces principales et la surface inférieure dudit conteneur en forme de plaque sont constituées de matériaux réticulés respectifs et dans lequel ladite surface et ladite surface inférieure sont toutes deux maintenues avec des plaques poinçonnées respectives.

3. Purificateur d'eau selon la revendication 1, dans lequel chacun desdits conteneurs en forme de plaque est rempli d'une résine échangeuse d'ions ou d'un adsorbant prescrits et dans lequel deux sortes de conteneurs en forme de plaque sont disposés en alternance dans ledit châssis.

4. Purificateur d'eau selon la revendication 1, dans lequel chacun desdits conteneurs en forme de plaque est rempli d'un mélange d'une résine échangeuse d'ions et d'un adsorbant.

5. Purificateur d'eau selon la revendication 1, dans lequel ladite multitude de conteneurs en forme de plaque est remplie d'une résine échangeuse d'ions.

6. Purificateur d'eau selon la revendication 1, dans lequel ladite multitude de conteneurs en forme de plaque est remplie d'un adsorbant.

7. Purificateur d'eau selon la revendication 1, dans lequel ledit châssis est constitué de matériaux réticulés fournis sur l'ensemble de sa surface.

8. Purificateur d'eau selon la revendication 1, dans lequel un liquide destiné à la purification est de l'eau de refroidissement devant être mise en circulation dans un système refroidi par eau d'un système fermé étanche à l'air.

FIG.1a

FIG.1b

FIG 2a

FIG.2b

FIG.3

FIG.4a

FIG.4b

FIG.5a

FIG.5b

FIG.6